Europäisches Patentamt

European Patent Office

Office européen des brevets

(19)

(11) Publication number: **0 140 443**
**B1**

(12) **EUROPEAN PATENT SPECIFICATION**

(45) Date of publication of patent specification: **27.01.88**

(51) Int. Cl.⁴: **A 01 G 27/00**

(21) Application number: **84201505.9**

(22) Date of filing: **16.10.84**

(54) An apparatus for automatically watering plants.

(30) Priority: **17.10.83 NL 8303579**

(43) Date of publication of application:
**08.05.85 Bulletin 85/19**

(45) Publication of the grant of the patent:
**27.01.88 Bulletin 88/04**

(84) Designated Contracting States:
**AT BE CH DE FR GB IT LI LU NL SE**

(56) References cited:
**EP-A-0 042 697**
**DE-A-2 813 410**
**GB-A-1 501 374**
**US-A-4 299 056**

(73) Proprietor: **Vogels, Augustinus Gerardus Maria**
**Thorbeckestraat 2**
**Naaldwijk (NL)**

(72) Inventor: **Vogels, Augustinus Gerardus Maria**
**Thorbeckestraat 2**
**Naaldwijk (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The present invention relates to an apparatus for automatically watering plants arranged on a substrate, which substrate is arranged in a box connected via a constriction to a receptacle placed adjacent the box and at a lower level, while between the substrate and the receptacle there is provided a downwardly extending capillary matting via the constriction, said apparatus further comprises a liquid supply conduit fitted with a valve operated by a control device controlled by feeler members of the control device extending into a measuring portion of the apparatus, which feeler members indicate the maximum and minimum position of the liquid respectively.

Such an apparatus is described e.g. in Dutch patent application 77.04535 or FR—A—2.388.489. This known apparatus controls the liquid supply to a very large number of adjacently disposed plants. By applying such an apparatus in e.g. a greenhouse for plants of conventional dimensions, the greenhouse is divided as regards the moisture supply e.g. into four parts, each being provided with a control device of the above mentioned type. When the control device is arranged in a location where the fluid consumption is expected to be the highest, it is ensured that all plants in this part of the greenhouse are sufficiently watered.

Since excess fluid cannot be re-used, in connection with the conveyance of disease germs, if any, this has to be discharged. Since a great many plants can be watered by means of the aforementioned measuring device, it is important to effect this overdose in an accurate manner.

It is, in fact, not possible to accurately establish the quantity of fluid consumed by means of the apparatus disclosed in the above Dutch patent application: this is to take place experimentally. Consequently, it is more difficult still to give the correct overdose, with the result that too much or too little fluid is supplied to the plant. It is an object of the present invention to remove these drawbacks.

To this effect, the apparatus according to the invention is characterized in that the box is provided with a subjacent trough which forms the receptacle so that the constriction connects the box to the trough and into which trough a vertically extending portion of the capillary matting passing through the constriction extends to the bottom of the trough, and wherein the trough is directly connected to the measuring portion whilst being separated therefrom, and the feeler member for indicating the maximum liquid position is disposed at the level of the constriction.

The measuring portion may be provided with an overflow opening, so that the excess is discharged adjacent the measuring device. Since the other plants in the greenhouse are arranged, in known manner, on a substrate portion enveloped by a plastics foil, the discharge of redundant liquid can be effected by making an incision or like opening in the plastics foil at the required location.

In a further embodiment of the present invention, the feeler member indicating the desired maximum liquid position may extend to adjacent the overflow opening, so that even the plants present adjacent the measuring device are provided with an accurate quantity of moisture.

The apparatus according to the present invention allows to determine the desired overdose in an easy manner: the desired minimum and maximum position for the measuring device can be set, without more ado in light of experience. By measuring the filling time needed for filling the measuring portion from the minimum to the maximum position, the additional filling time and hence the overdosage can also be easily set. Since the feeler member extends to adjacent the constriction for indicating the maximum liquid position, a highly accurate setting can be obtained, which is of great importance, considering the total surface area to be wetted.

It is stressed that the present invention concerns a system wherein a substrate is used in which the roots find support and under which substrate there is a matting and not a hydro- or water cultivation system, as disclosed e.g. in German Offenlegungsschrift 2,813,410 and European patent application 42,697, in which the roots are included in a pot under which there is the matting.

Furthermore, British patent 1,501,374 discloses a system wherein pot plants are arranged on a capillary matting, a depending edge of which extends into a trough to be provided with fluid. There is no question here of any control.

This also applies to the substrate system described in US patent 4,299,056, wherein a substrate packaged in a capillary matting is described and in which a depending part of the capillary material is present in a liquid-filled trough. There is no question of any control, however.

One embodiment of the apparatus for wetting plants according to the invention will now be described, by way of example, with reference to the accompanying drawings, in which:

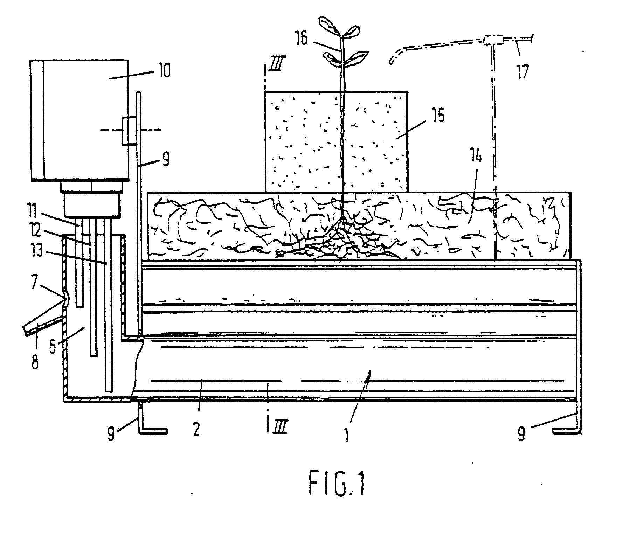

Fig. 1 is a part-cross-sectional side view of an apparatus for controlling the watering of plants;

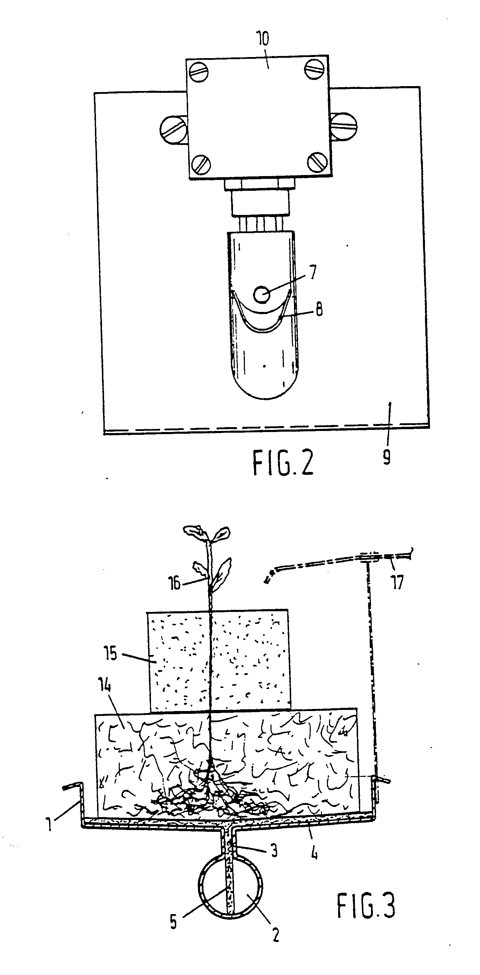

Fig. 2 is a side view of the apparatus shown in Fig. 1, and

Fig. 3 is a cross-section on the line III—III of Fig. 1.

As shown in the drawings, an apparatus for watering plants comprises a frame 9 receiving a stainless steel box 1 fitted on the underside with a water supply trough 2 extending along the length of the box. The supply trough 2 is connected to the box 1 by means of a constriction 3. On the bottom of the box there is provided a cotton matting 4, which is enveloped at least partly by a foil, not shown. The matting has a downwardly extending portion 5, which extends via the constriction 3 to the bottom of the trough 2. The trough 2 connects to the measuring portion 6 which is fitted with an overflow opening 7. Underneath the opening, there is provided a drip edge 8 on the outer side of the measuring portion.

To the frame 9, there is also attached a control device 10 which is fitted with three feeler members 11, 12 and 13. Such a control-device with feeler members is known per se from Dutch patent application 70.06427 and the afore cited Dutch patent application 77.04535. The feeler member 11 extends to adjacent the lower edge of the overflow opening 7 and indicates a maximum fluid position, while the feeler member 12 extends to the level of the trough 2 and indicates a minimum position. The electrode 13 extends to beneath the level of the trough, and indicates an alarm position.

In the box 1 there is provided on the cotton matting 4 a mineral wool matting 14, also called substrate, which is enveloped by a foil, not shown, which is fitted at the top with an opening for placing thereon a plant pot 15 with a plant 16 whose roots, in time, extend to adjacent the underside of the substrate. The plant 16 can be watered via a diagrammatically shown liquid supply conduit 17 incorporating a valve, not shown, operated by the control device 10.

The operation of the apparatus is as follows: As soon as the liquid level in the measuring portion falls to underneath the electrode 12, liquid is supplied through the conduit 17. As soon as the liquid level again touches the electrode 11, the desired overdosage commences and the excess is discharged via the opening 7.

The apparatus offers the possibility of accurately measuring the quantity of water employed, so that also the desired quantity of overdosage can be established in an accurate manner. A consequence is that the loss of liquid, which may or may not contain nutrients, is minimized.

Naturally, it is also possible to apply further variants for instance, each plant or group of plants may be arranged in a box 4, or, as in the embodiment shown, a plant may be disposed in the box 4 and the other plants of the group on separate substrate mattings situated directly on the bottom.

### Claims

1. An apparatus for automatically watering plants arranged on a substrate (14), which substrate is arranged in a box (1) connected via a constriction (3) to a receptacle (2) placed adjacent the box and at a lower level, while between the substrate and the receptacle (2) there is provided a downwardly extending capillary matting (5) via the constriction, said apparatus further comprises a liquid supply conduit (17) fitted with a valve operated by a control device (10) controlled by feeler members (11, 12, 13) of the control device extending into a measuring portion (6) of the apparatus, which feeler members (11, 12) indicate the maximum and minimum position of the liquid respectively, characterized in that the box (1) is provided with a subjacent trough (2) which forms the receptacle so that the constriction connects the box to the trough and into which trough a vertically extending portion (5) of the capillary matting (14) passing through the constriction extends to the bottom of the trough (3), and wherein the trough is directly connected to the measuring portion (6) whilst being separated therefrom, and the feeler member (11) for indicating the maximum liquid position is disposed at the level of the constriction.

2. An apparatus according to claim 1, characterized in that the measuring portion (6) is fitted with an overflow opening (7).

3. An apparatus according to claim 2, characterized in that the feeler member (11) indicating the desired maximum liquid position extends to adjacent the overflow opening (7).

### Patentansprüche

1. Vorrichtung zur automatischen Bewässerung von Pflanzen, die in einem Substrat (14) angeordnet sind, das in einem Kasten (1) angeordnet ist, der über eine Verengung (3) mit einem Behälter (2) verbunden ist, der angrenzend an den Kasten auf einer niedrigeren Ebene angeordnet ist, wobei zwischen dem Substrat und dem Behälter (2) eine sich nach unten durch die Verengung erstreckende Kapillarmatte vorgesehen ist, wobei die Vorrichtung weiter eine mit einem Ventil versehene Flüssigkeitszufuhrleitung (17) umfaßt, das von einer Steuereinrichtung (10) betätigt wird, die von Fühlgliedern (11, 12, 13) gesteuert wird, die sich in einen Meßbereich (6) der Vorrichtung erstrecken, wobei die Fühlglieder (11, 12) jeweils die Maximum- und Minimumstellung der Flüssigkeit anzeigen, dadurch gekennzeichnet, daß der Kasten (1) mit einer tiefer liegenden Rinne (2) ausgerüstet ist, die den Behälter bildet, so daß die Verengung den Kasten mit der Rinne verbindet, wobei sich in die Rinne ein sich senkrecht durch die Verengung erstreckender Teil (5) der Kapillarmatte (14) bis zum Boden der Rinne (3) erstreckt und wobei die Rinne direkt mit dem Meßbereich (6) verbunden, davon jedoch getrennt ist und das Fühlglied (11), das die maximale Flüssigkeitshöhe anzeigt, in Höhe der Verengung angeordnet ist.

2. Vorrichtung nach Anspruch 1, dadurch gekennzeichnet, daß der Meßteil (6) mit einer Überlauföffnung (7) versehen ist.

3. Vorrichtung nach Anspruch 2, dadurch gekennzeichnet, daß das Fühlglied (11), das die gewünschte maximale Flüssigkeitshöhe angibt, sich bis angrenzend zur Überlauföffnung (7) erstreckt.

### Revendications

1. Appareil pour l'irrigation automatique de plantes agencées sur un substrat (14), lequel substrat est disposé dans une boîte (1) reliée via un étranglement (3) à un réceptacle (2) placé de façon adjacente à la boîte et à un niveau inférieur, tandis que, entre le substrat et le réceptacle (2), il est prévu une natte capillaire (5) s'étendant vers le bas via l'étranglement, ledit appareil comprenant de plus un conduit d'alimentation de liquide (17) muni d'une soupape actionnée par un dispositif de commande (10) commandé par des organes sensibles (11, 12, 13) du dispositif de commande s'étendant dans une partie de mesure (6) de l'appareil, lesquels organes sensibles (11, 12) indiquent les positions maximale et minimale du liquide, respectivement, caractérisé en ce que la boîte (1) est muni d'un passage sous-jacent (2) qui forme le réceptacle de sorte que l'étranglement relie la boîte au passage, et en ce que dans ledit passage, s'étend une partie s'étendant verticalement (5) de la natte capillaire (14) passant à travers l'étranglement, vers le fond du passage (2), et en ce que le passage est directement relié à la partie de mesure (6), tout en étant séparé de celle-ci, et l'organe sensible (11) pour indiquer la position maximale du liquide est disposé au niveau de l'étranglement.

2. Appareil selon la revendication 1, caractérisé en ce que la partie de mesure (6) est munie d'une ouverture de trop-plein (7).

3. Appareil selon la revendication 2, caractérisé en ce que l'organe sensible (11) indiquant la position maximale souhaitée du liquide s'étend jusqu'à proximité de l'ouverture de trop-plein (7).

FIG.1

1

FIG.2

FIG.3